Europäisches Patentamt

European Patent Office

Office européen des brevets

(11) Veröffentlichungsnummer: **0 248 163**
B1

(12) **EUROPÄISCHE PATENTSCHRIFT**

(45) Veröffentlichungstag der Patentschrift:
05.09.90

(51) Int. Cl.⁵: **B60B 35/06**

(21) Anmeldenummer: 87104641.3

(22) Anmeldetag: 28.03.87

(54) Anhängerachse.

(30) Priorität: 02.05.86 DE 3614811

(43) Veröffentlichungstag der Anmeldung:
09.12.87 Patentblatt 87/50

(45) Bekanntmachung des Hinweises auf die Patenterteilung:
05.09.90 Patentblatt 90/36

(84) Benannte Vertragsstaaten:
DE ES FR GB IT SE

(56) Entgegenhaltungen:
DE-C- 154 778
FR-A- 909 075

(73) Patentinhaber: Bergische Achsenfabrik Fr. Kotz &
Söhne, Am Ohlerhammer, D-5276 Wiehl 1(DE)

(72) Erfinder: Korte, Erich, Perker Strasse 57,
D-5276 Wiehl(DE)

(74) Vertreter: Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist eine Anhängerachse mit einem von den Achsschenkeln ausgehend zur Fahrbahn hin abgekröpften, aus einem Rohr bestehenden Mittelteil, an dem zwei Z-förmige Verbindungsstücke angeordnet sind.

Anhängerachsen der vorstehend bezeichneten Gattung werden für Fahrzeuge mit einer unter die Drehachse der Räder abgesenkten Ladefläche benötigt. Bei den bekannten Anhängerachsen diese Konstruktion für schwere Lasten sind die massiv geschmiedeten Achsschenkel mit einem massiv geschmiedeten Mittelteil verschweißt, dessen Enden abgekröpft sind. Diese Anhängerachsen sind sehr schwer und vergrößern das Leergewicht bzw. vermindern das zulässige Ladegewicht. Für geringe Lasten ist aus der DE-B 154 778 eine Knieachse bekannt geworden, deren Achsschenkel und Mittelteil aus Rohren bestehen und mit gegossenen, Z-förmigen Verbindungsstücken verbunden sind.

Ferner ist aus der FR-A 909 075 eine gekröpfte Achse bekannt, die aus rechteckigen Rohrstücken zusammengeschweißt ist. Die aneinanderstoßenden Endflächen der einzelnen rechteckigen Rohrstücke sind unter einem Winkel von 45° zur Längserstreckung der Rohrstücke angeordnet. Auf diese Weise ergibt sich, daß die Konstruktionsteile auf Gehrung geschnitten und dann in Form einer gekröpften Achse zusammengeschweißt werden. Die bekannte Achse weist weiterhin Achsschenkel auf, die mit einer Platte an einem Ende eines rechteckigen Rohrstücks angeschweißt sind.

Ausgehend von diesem Stand der Technik liegt der Erfindung die Aufgabe zugrunde, unter Verwendung herkömmlicher, geschmiedeter Achsschenkel und unter Beibehaltung einer äußerlich glatten Konstruktion, das Gewicht der Anhängerachse für schwere Lasten drastisch zu vermindern.

Zur Lösung dieser Aufgabe wird erfindungsgemäß vorgeschlagen, daß die Verbindungsstücke geschmiedet sind und hohl ausgebildete Enden aufweisen, daß die inneren Enden der im übrigen massiven Achsschenkel hohl ausgebildet sind, daß die ringförmigen Stoßflächen an den Enden des Mittelteiles, der Verbindungsstücke und der Achsschenkel die gleichen Konturen und Flächen haben, daß die Konstruktionsteile bündig miteinander verbunden sind und daß die Verbindung der Konstruktionsteile im Abbrennstumpfschweißverfahren erfolgt.

Eine nach dieser technischen Lehre hergestellte Anhängerachse hat im Vergleich zur zulässigen Achslast ein verhältnismäßig geringes Eigengewicht. Die Verwendung herkömmlicher Achsschenkel bleibt möglich. Diese Leichtbaukonstruktion findet vorzugsweise Verwendung für Auto-Transportanhänger.

Weitere Einzelheiten und Vorteile ergeben sich aus der nachfolgenden Beschreibung der zugehörigen Zeichnung, in der verschiedene Ausführungsvarianten im Längsschnitt dargestellt worden sind. In der Zeichnung zeigen:

Fig. 1 eine Anhängerachse im Längsschnitt;
Fig. 2 ein geschwungenes Verbindungsstück im Längsschnitt;
Fig. 3 ein Verbindungsstück mit weiteren Ausnehmungen zur Gewichtseinsparung;
Fig. 4 ein hohl ausgebildetes Verbindungsstück.

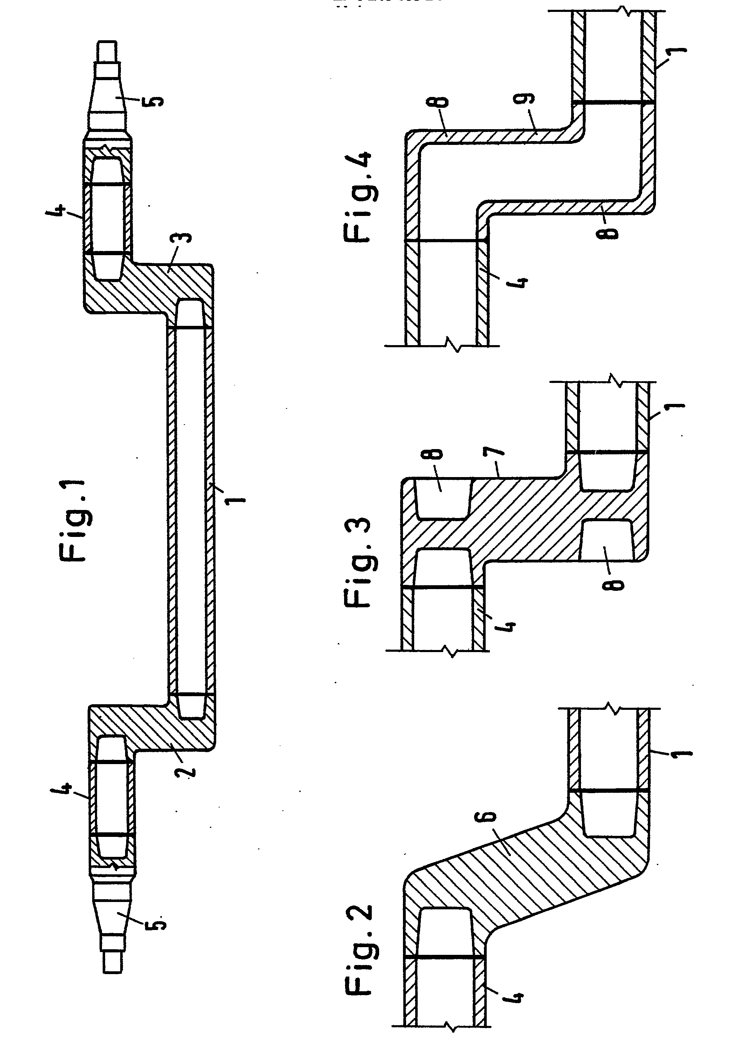

Die in der Fig. 1 dargestellte Anhängerachse besteht aus einem rohrförmigen Mittelteil 1, zwei Z-förmigen Verbindungsstücken 2, 3, zwei Verlängerungsrohren 4 und zwei Achsschenkeln 5.

Das Mittelteil 1 kann eine runde oder auch polygonale Außenkontur haben, aus einem gezogenen Rohr oder auch mit Längsnähten zusammengeschweißten Profilen bestehen. Das gleiche gilt für die Verlängerungsrohre 4.

Die Enden der Verbindungsstücke 2, 3 und der Achsschenkel 5 sind hohl ausgebildet, so daß ringförmige Stoßflächen entstehen, welche die gleichen Konturen und die gleichen Flächen haben wie die entsprechenden Stoßflächen an den Enden des Mittelteiles 1 und der Verbindungsrohre 4.

Die Konstruktion ist zweckmäßig so auszuführen, daß die beiden Verbindungsstücke 2, 3 identisch sind und auf beiden Seiten Verwendung finden können, wenn sie um 180° gedreht werden.

Das in der Fig. 2 dargestellte Verbindungsstück 6 ist im Vergleich zu den beiden anderen Verbindungsstücken 2, 3 in der Fig. 1 etwas mehr geschwungen.

Bei dem in der Fig. 3 dargestellten Verbindungsstück 7 sind zusätzliche Ausnehmungen 8 zur weiteren Gewichtseinsparung vorgesehen.

Die Verbindungsstücke 2, 3; 6 und 7 sowie die Achsschenkel 5 werden im Gesenk geschmiedet.

Das in Fig. 4 dargestellte Verbindungsstück 9 ist zur weiteren Gewichtseinsparung hohl ausgebildet.

Bezugszeichenliste

1 Mittelteil
2 Verbindungsstück
3 Verbindungsstück
4 Verlängerungsrohr
5 Achsschenkel
6 Verbindungsstück
7 Verbindungsstück
8 Ausnehmungen
9 Verbindungsstück

**Patentansprüche**

1. Anhängerachse mit einem von den Achsschenkeln (5) ausgehend zur Fahrbahn hin abgekröpften, aus einem Rohr bestehenden Mittelteil (1), an dem zwei Z-förmige Verbindungsstücke (6) angeordnet sind, dadurch gekennzeichnet, daß die Verbindungsstücke (6) geschmiedet sind und hohl ausgebildete Enden aufweisen, daß die inneren Enden der im übrigen massiven Achsschenkel (5) hohl ausgebildet sind, daß die ringförmigen Stoßflächen an den Enden des Mittelteiles (1), der Verbindungsstücke (2, 3) und der Achsschenkel (5) die gleichen Konturen und Flächen haben, daß die Konstruktionsteile bündig miteinander verbunden sind und daß die Ver-

bindung der Konstruktionsteile im Abbrennstumpf-schweißverfahren erfolgt.

2. Anhängerachse nach Anspruch 1, dadurch gekennzeichnet, daß zwischen die Achsschenkel (5) und die Verbindungsstücke (2, 3) Verlängerungsrohre (4) eingeschweißt sind.

3. Anhängerachse nach den Ansprüchen 1 und 2, dadurch gekennzeichnet, daß die Verbindungsstücke (7) zur Gewichtseinsparung mit Ausnehmungen (8) versehen sind.

4. Anhängerachse nach den Ansprüchen 1 bis 3, dadurch gekennzeichnet, daß die Verbindungsstücke (9) hohl ausgebildet sind.

## Claims

1. A trailer axle having a central member (1) which starts from the stub axles (5) and which is cranked towards the road and which is embodied by a tube and on which two Z-shaped connecting members (6) are disposed, characterised in that the connecting members (6) are forged and have hollow ends, the inner ends; of the in other respects solid stub axles (5) are hollow, the annular abutment surfaces at the ends of the central member (1) connecting members (2, 3) and stub axles (5) have the same contours and surfaces, the construction elements are interconnected flush with one another and the construction elements are joined together by flash-butt welding.

2. An axle according to claim 1, characterised in that extension tubes (4) are welded in between the stub axles (5) and the connecting members (2, 3).

3. An axle according to claims 1 and 2, characterised in that the connecting members (7) are formed with recesses (8) for lightness.

4. An axle according to claims 1–3, characterised in that the connecting members (9) are hollow.

## Revendications

1. Essieu de remorque avec une partie centrale (1) décalée en direction de la chaussée à partir des fusées d'essieu (5), constituée d'un tube, et sur laquelle sont agencées deux pièces de liaison (6) en forme de "Z", caractérisé en ce que les pièces de liaison (6) sont forgées et présentent des extrémités de configuration creuse, en ce que les extrémités intérieures des fusées d'essieu (5), par ailleurs massives, sont de configuration creuse, en ce que les surfaces de joint, annulaires, aux extrémités de la partie centrale, des pièces de liaison (2, 3) et des fusées d'essieu (5), présentent les mêmes contours et la même surface, en ce que les pièces constitutives de l'ensemble sont assemblées de manière jointive, et en ce que l'assemblage des pièces constitutives de l'ensemble s'effectue par soudage en bout par étincelage.

2. Essieu de remorque selon la revendication 1, caractérisé en ce que des tubes de prolongement (4) sont soudés entre les fusées d'essieu (5) et les pièces de liaison (2, 3).

3. Essieu de remorque selon les revendications 1 et 2, caractérisé en ce que les pièces de liaison (7) sont pourvues d'évidements (8) en vue de la réduction de leur poids.

4. Essieu de remorque selon les revendications 1 à 3, caractérisé en ce que les pièces de liaison (9) sont creuses.

# Fig.1

# Fig. 2

# Fig. 3

# Fig.4

EP 0 248 163 B1